# EUROPÄISCHE PATENTANMELDUNG

(11) **EP 0 760 258 A1**
(43) Veröffentlichungstag der Anmeldung: **05.03.1997**
(21) Anmeldenummer: 95113810.6
(22) Anmeldetag: 02.09.1995
(51) Int. Cl.: B02C 21/00, B02C 17/00

(54) **Verfahren zur Aufbereitung einer bei Betrieb einer Hammerbrecher- bzw. Shredderanlage anfallenden, inhomogenen Gutfraktion**

(71) Anmelder: THYSSEN INDUSTRIE AG, 45128 Essen (DE)
(72) Erfinder: Djawadi, Hassan, Dr.-Ing., D-34132 Kassel (DE); Häusler, Dietrich, D-34292 Ahnatal (DE); Schäfer, Siegmar, Dr.-Ing., D-09599 Freiberg (DE); Serban, Petre, Dipl.-Ing., D-34125 Kassel (DE)

(57) **Zusammenfassung**

Nach bekannten Verfahren wird die Shredder-Leichtfraktion in Hammer- oder Schlägermühlen zerkleinert. Im Ergebnis dieser Zerkleinerungsprozesse entsteht ein Produkt stark variierender Korn- bzw. Stückgröße, dessen Materialkomponenten ihrerseits eine breite, sich zumindest teilweise überlappende Korn- bzw. Stückgrößenverteilung und einen der betreffenden Komponente wenig angepaßten Aufschlußgrad aufweisen.

Mit der Erfindung soll ein Verfahren zur Aufbereitung einer stark inhomogenen Gutfraktion geschaffen werden, mit dem ein der vorgesehenen Verwendung der einzelnen Materialkomponenten der Gutfraktion weitgehend angepaßter Aufschluß- bzw. Zerkleinerungsgrad erreicht wird.

Die Lösung dieses Problems liegt bei einem Verfahren zur Aufbereitung der Shredder-Leichtfraktion im Einsatz einer stabförmige Mahlkörper enthaltenden Trommelmühle, die dem selektiven Aufschluß der einzelnen Materialkomponenten dient.

## Beschreibung

Die Erfindung betrifft ein Verfahren zur Aufbereitung einer bei Betrieb einer Hammerbrecher- bzw. Shredderanlage anfallenden, inhomogenen Gutfraktion, vorzugsweise einer Shredder-Leichtfraktion, nach dem Oberbegriff des Anspruchs 1.

Nach bekannten Verfahren wird die Shredder-Leichtfraktion in Hammer- oder Schlägermühlen zerkleinert. Im Ergebnis dieser Zerkleinerungsprozesse entsteht ein Produkt stark variierender Korn- bzw. Stückgröße, dessen Materialkomponenten ihrerseits eine breite, sich zumindest teilweise überlappende Korn- bzw. Stückgrößenverteilung aufweisen, unabhängig davon, in welcher Korn- bzw. Stückgröße eine jede dieser Materialkomponenten für eine Weiterverwendung derselben vorliegen sollte. So werden Metalle bei längerer Verweildauer in vorgenannten Mühlen zum Teil so stark zerkleinert, daß die Metalle einer Separation von anderen Materialkomponenten nicht mehr zugänglich sind. Andererseits ist bei kürzerer Verweilzeit der Aufschlußgrad bestimmter Materialkomponenten-Gemische noch nicht so groß, daß die Materialkomponenten dieser Gemische voneinander getrennt werden könnten.

Versuchsweise sind auch Schneidwalzenmühlen zum Einsatz gekommen, die allerdings einem hohen Verschleiß unterliegen.

Daher liegt der Erfindung die Aufgabe zugrunde, ein Verfahren zur Aufbereitung einer bei Betrieb einer Hammerbrecher- bzw. Shredderanlage anfallenden, inhomogenen Gutfraktion zu schaffen, mit dem ein der vorgesehenen Verwendung der einzelnen Materialkomponenten der Gutfraktion weitgehend angepaßter Aufschluß- bzw. Zerkleinerungsgrad erreicht wird.

Diese Aufgabe wird erfindungsgemäß gelöst, indem bei einem Verfahren gattungsgemäßen Typs die aufzubereitende Gutfraktion in einer stabförmige Mahlkörper enthaltenden Trommelmühle aufgeschlossen bzw. zerkleinert wird.

Mit der Erfindung ist insbesondere der Vorteil verbunden, daß in einer stabförmige Mahlkörper enthaltenden Trommelmühle die aufzubereitende, inhomogene Gutfraktion in Vorbereitung der Trennung ihrer Bestandteile aufgeschlossen werden kann, ohne über diesen Aufschluß eine unerwünschte weitere Zerkleinerung einzelner Materialkomponenten hervorzurufen.

Im Ergebnis des Aufschlusses der inhomogenen Gutfraktion und infolge des unterschiedlichen Zerkleinerungsverhaltens der Bestandteile dieser Gutfraktion entstehen Materialkomponenten unterschiedlicher Korn- bzw. Stückgröße, so daß in zweckmäßiger Verfahrensdurchführung eine Trennung dieser Materialkomponenten nach Korn- bzw. Stückgrößen erfolgen kann.

Dabei wird eine solche Trennung insbesondere zur Verringerung der im Verfahren benötigten Vorrichtungen bevorzugt in der mit stabförmigen Mahlkörpern versehenen Trommelmühle durchgeführt. Der Einbau von Leitblechen im Gutaustragsbereich einer solchen Mühle erhöht den erreichbaren Klassierungseffekt.

Ist der Zerkleinerungsgrad der Komponenten der aufbereiteten Gutfraktion für deren weitere Verwendung noch nicht ausreichend, so wird bevorzugt jede dieser Materialkomponenten zweckmäßig in mindestens einem weiteren Durchlauf in der mit stabförmigen Mahlkörpern versehenen Trommelmühle auf eine entsprechende Endgröße nachzerkleinert.

Zur Beeinflussung der Struktur der aus dem Verfahren hervorgehenden Materialkomponenten erfolgt in Abhängigkeit vom Aufschluß- bzw. Zerkleinerungsverhalten der aufzubereitenden Gutfraktion eine Veränderung der Materialart und/oder der Geometrie der Stäbe der Trommelmühle.

Eine besonders wirkungsvolle Beeinflussung des Verfahrensergebnisses wird erreicht, indem die Materialart und/oder die Geometrie der Stäbe der Trommelmühle in Abhängigkeit vom Aufbereitungsergebnis der Metalle verändert werden.

## Patentansprüche

1. Verfahren zur Aufbereitung einer bei Betrieb einer Hammerbrecher- bzw. Shredderanlage anfallenden, inhomogenen Gutfraktion, vorzugsweise einer Shredder-Leichtfraktion, die aus mehreren Materialkomponenten, wie Metallen, Kunststoffen, keramischen und textilen Stoffen besteht und deren Materialkomponenten unterschiedliches Bruchverhalten zeigen, dadurch gekennzeichnet, daß die Gutfraktion in einer stabförmige Mahlkörper enthaltenden Trommelmühle aufgeschlossen bzw. zerkleinert wird.

2. Verfahren nach Anspruch 1, dadurch gekennzeichnet, daß die in der mit stabförmigen Mahlkörpern versehenen Trommelmühle aufgeschlossene bzw. zerkleinerte Gutfraktion nach Korn- bzw. Stückgrößen ihrer Materialkomponenten getrennt wird.

3. Verfahren nach Anspruch 2, dadurch gekennzeichnet, daß die Trennung der Materialkomponenten nach Korn- bzw. Stückgrößen in der mit stabförmigen Mahlkörpern versehenen Trommelmühle erfolgt.

4. Verfahren nach Anspruch 2 oder 3, dadurch gekennzeichnet, daß eine oder mehrere der im Ergebnis der Trennung entstandenen Materialkomponenten in einer weiteren Zerkleinerungsvorrichtung auf die durch den Verwendungszweck der betreffenden Materialkomponente bestimmte Endgröße nachzerkleinert werden.

5. Verfahren nach Anspruch 2 oder 3, dadurch gekennzeichnet, daß eine oder mehrere der im Ergebnis der Trennung entstandenen Materialkomponenten in mindestens einem weiteren Durchlauf in der mit stabförmigen Mahlkörpern versehenen Trommelmühle auf die durch den Verwendungszweck der betreffenden Materialkomponente bestimmte Endgröße nachzerkleinert werden.

6. Verfahren nach Anspruch 1, dadurch gekennzeichnet daß in Abhängigkeit vom Aufschluß- bzw. Zerkleinerungsverhalten der aufzubereitenden Gutfraktion eine Veränderung der Materialart und/oder der Geometrie der Stäbe der Trommelmühle erfolgt.

7. Verfahren nach Anspruch 1, dadurch gekennzeichnet, daß in Abhängigkeit vom Aufbereitungszustand der Metalle, der mittels der Trommelmühle errreicht wird, eine Veränderung der Materialart und/oder der Geometrie der Stäbe der Trommelmühle erfolgt.
